**Europäisches Patentamt**

**European Patent Office**

**Office européen des brevets**

(11) Veröffentlichungsnummer: **0 120 332**
**B1**

# (12) EUROPÄISCHE PATENTSCHRIFT

(45) Veröffentlichungstag der Patentschrift:
**01.04.87**

(21) Anmeldenummer: **84102124.9**

(22) Anmeldetag: **29.02.84**

(51) Int. Cl.⁴: **B 62 D 61/12**

(54) **Achsanhebevorrichtung.**

(30) Priorität: **18.03.83 DE 3309729**

(43) Veröffentlichungstag der Anmeldung:
**03.10.84 Patentblatt 84/40**

(45) Bekanntmachung des Hinweises auf die Patenterteilung:
**01.04.87 Patentblatt 87/14**

(84) Benannte Vertragsstaaten:
**DE FR GB IT NL**

(56) Entgegenhaltungen:
**DE - A - 1 480 241**
**DE - A - 2 635 668**
**DE - U - 8 006 759**
**FR - A - 2 068 115**

(73) Patentinhaber: **Bergische Achsenfabrik Fr. Kotz & Söhne, Am Ohlerhammer, D-5276 Wiehl 1 (DE)**

(72) Erfinder: **Adolfs, Manfred, Ing. grad., In der Bockemühle 47, D-5275 Bergneustadt (DE)**
Erfinder: **Steiner, Helmut, Freiherr-vom-Stein-Strasse 1, D-5276 Wiehl (DE)**

(74) Vertreter: **Patentanwälte Dipl.-Ing. Alex Stenger Dipl.-Ing. Wolfram Watzke Dipl.-Ing. Heinz J. Ring, Kaiser-Friedrich-Ring 70, D-4000 Düsseldorf 11 (DE)**

## Beschreibung

Gegenstand der Erfindung ist eine Achsanhebevorrichtung für eine luftgefederte Achse mit einem den Achskörper untergreifenden, L-förmig ausgebildeten Hebel, einem vertikal wirkenden Hubbalg zum Anheben des Hebels und einem Schwenkzylinder zum Verschwenken des Hebels unter den Achskörper, wobei der lange Schenkel des Hebels an einem mit dem Hubbalg verbundenen Bügel gelagert ist und der Schwenkzylinder an dem gleichen Bügel befestigt ist. Achsanhebevorrichtungen dieser Art sind z.B. aus der DE-A-14 80 241 bekannt.

Achsanhebevorrichtung sind in verschiedenen Konstruktionen bekannt und werden beispielsweise dazu benutzt, bei Leerfahrt eine Achse eines Doppelachsaggregates soweit anzuheben, dass die Reifen keinen Bodenkontakt mehr haben und infolgedessen auch keinem Verschleiss mehr unterliegen. Um die Achse anheben zu können, werden ihre Luftfederbälge entlüftet und der Hubbalg belüftet. Der Hubbalg ist so in die Installation der Luftfederanlage eingeschaltet, dass die Achse beim Überschreiten eines bestimmten Luftdruckes durch einen Druckschalter wieder abgesenkt wird.

Aus der o.g. DE-A-14 80 241 ist eine Achsanhebevorrichtung bekannt, die einen verhältnismässig langen, zweiarmigen Hebel besitzt, dessen eines Ende mit einem verschwenkbaren Haken die Achse untergreift und mit einem am anderen Ende zum Fahrzeugrahmen hin angeordneten Hubbalg zusammenwirkt.

Diese bekannte Achsanhebevorrichtung vergrössert regelmässig den in Fahrzeuglängsrichtung gesehenen Raumbedarf für die Achse.

Aus der FR-A 20 68 115 ist eine andere Achsanhebevorrichtung bekannt, welche einen den Achskörper untergreifenden, L-förmig ausgebildeten Hebel und einen Schwenkzylinder zum Verschwenken dieses Hebels besitzt. Der Hubzylinder und der Schwenkzylinder sind getrennt voneinander am Fahrzeugrahmen befestigt bzw. angelenkt, so dass eine komplizierte Steuerung für eine kontrollierte Bewegung des Hebels erforderlich ist.

Davon ausgehend liegt der Erfindung die Aufgabe zugrunde, eine einfach konstruierte Achsanhebevorrichtung zu schaffen, die in Fahrzeuglängsrichtung gesehen zwischen Lenkerkonsole und Luftfeder innerhalb des von der Achsaufhängung und -federung begrenzten Raumes untergebracht werden kann, um allen Anforderungen bei Achsaggregaten in gezogenen Fahrzeugen und Schleppachsen in Lastkraftwagen zu entsprechen.

Als technische Lösung wird dafür vorgeschlagen, dass der Bügel ein U-förmiger Bügel ist, dessen beide Schenkel nach unten gerichtet sind und den langen Schenkel des Hebels lagern, wobei der Hubbalg am Steg des U-förmigen Bügels angreift, so dass der Bügel vertikal bewegbar ist.

Bei einer praktischen Ausführungsform kann der Schwenkzylinder selbst aus einem an sich bekannten Membranzylinder bestehen, dessen Kolbenstange gelenkig an dem Hebel angreift.

Eine erfindungsgemäss ausgebildete Achsanhebevorrichtung hat den Vorteil, dass sie auf sehr kleinem Raum dicht neben und oberhalb des Achskörpers untergebracht werden kann und mit einer einfachen hydraulischen oder pneumatischen Schaltung eine kontrollierte Hubbewegung sowie eine davon getrennte Schwenkbewegung ermöglicht.

Weitere Einzelheiten und Vorteile des Gegenstandes der Erfindung ergeben sich aus der nachfolgenden Beschreibung der zugehörigen Zeichnungen, in denen eine bevorzugte Ausführungsform einer erfindungsgemäss ausgebildeten Achsanhebevorrichtung schematisch dargestellt worden ist. In den Zeichnungen zeigen:

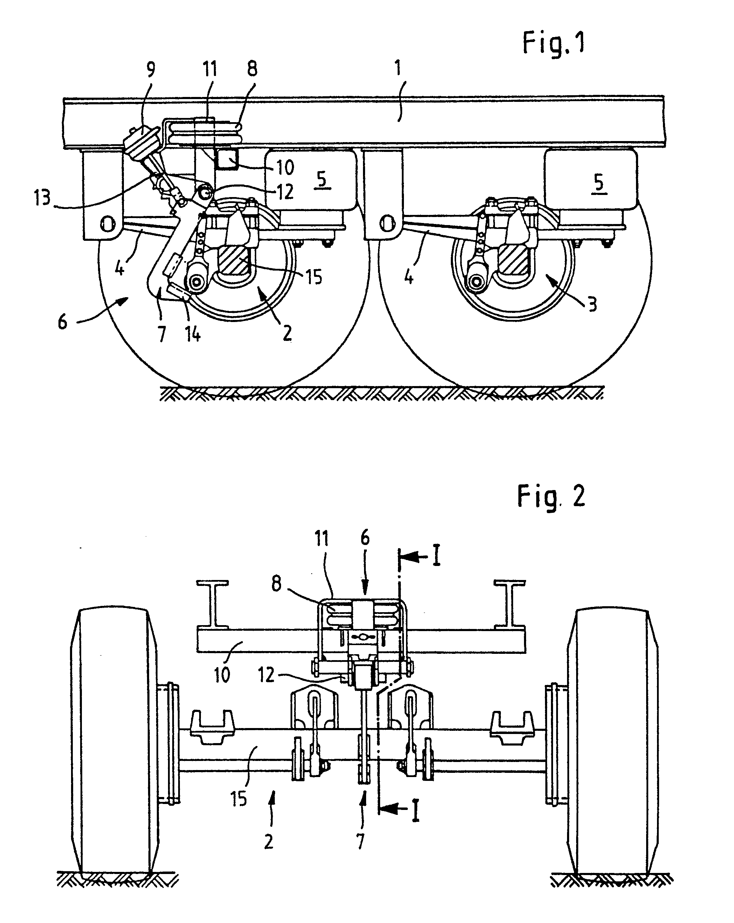

Fig. 1 ein Doppelachsaggregat mit abgesenkten Achsen entlang der Linie I–I in Fig. 2 geschnitten in Seitenansicht;

Fig. 2 dasselbe Doppelachsaggregat in Fahrtrichtung gesehen;

Fig. 3 ein Doppelachsaggregat mit einer angehobenen Achse entlang der Linie III–III in Fig. 4 geschnitten in Seitenansicht;

Fig. 4 dasselbe Doppelachsaggregat in Fahrtrichtung gesehen;

Fig. 5 ein Schaltschema für eine Luftfederanlage eines Doppelachsaggregates mit einer Achsanhebevorrichtung.

Unter einem Fahrzeugrahmen 1 sind zwei Achsen 2, 3 mit Lenkern 4 geführt und mit Luftfederbälgen 5 abgestützt. An der in Fahrtrichtung vorn liegenden Achse 2 ist in der Mitte eine Anhebevorrichtung 6 vorgesehen, die im wesentlichen aus einem L-förmig ausgebildeten Hebel 7, einem Hubbalg 8 und einem Schwenkzylinder 9 besteht.

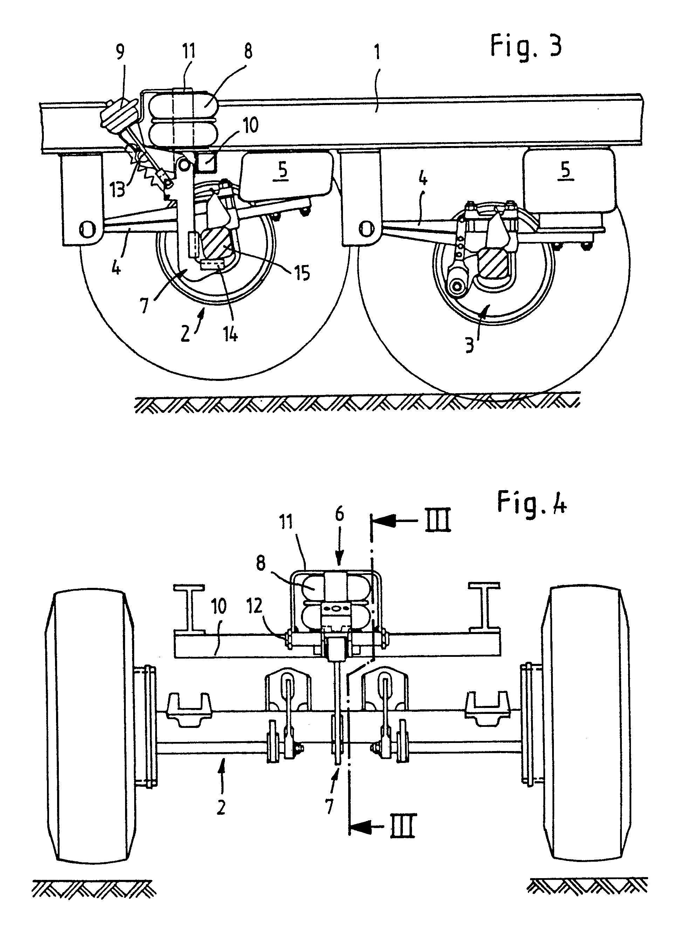

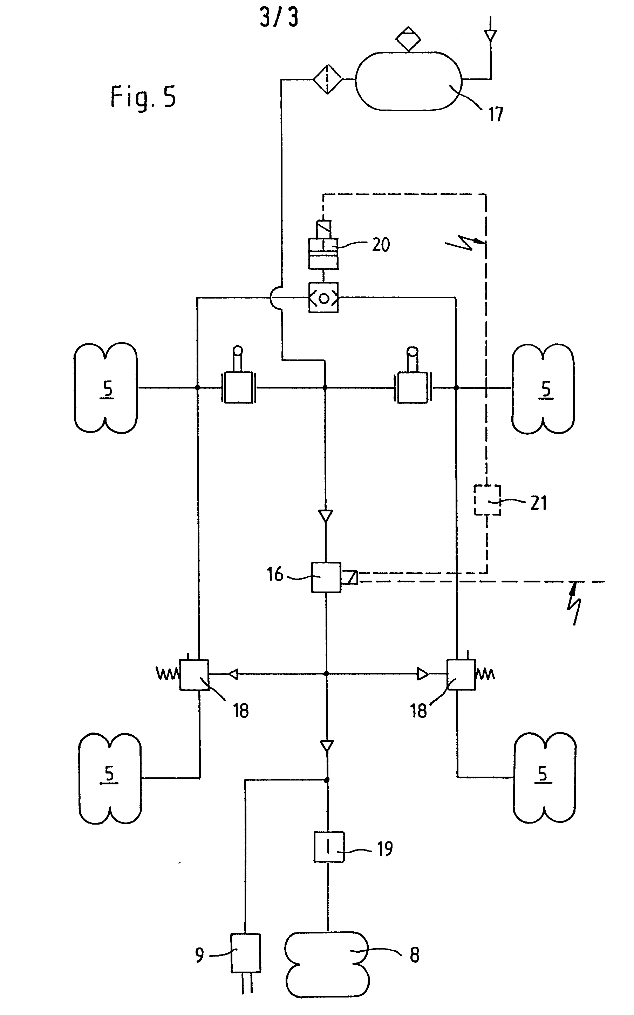

Der Hubbalg 8 ist zwischen einer Quertraverse 10 und einem U-förmigen Bügel 11 angeordnet, an dem der Hebel 7 mit einer Schwenkachse 12 gelagert ist. Mit einer Kolbenstange 13 des Schwenkzylinders 9 kann der Hebel 7 mit seinem kurzen Schenkel 14 unter den Achskörper 15 geschwenkt werden. Wenn dann der Hubbalg 8 an die Druckluftanlage angeschlossen und die Luftfederbälge 5 entlüftet werden, kann die Achse 2 in die in den Fig. 3 und 4 dargestellte Lage angehoben werden.

Die in der Fig. 5 dargestellte Schaltung für die Druckluftanlage funktioniert folgendermassen:

Zum Anheben der Achse 2 wird mit einem elektrischen Signal zunächst ein Magnetventil 16 geöffnet. Die von einem Druckbehälter 17 kommenden Leitungen zu 3/2 Wegeventilen 18 werden freigegeben. Gleichzeitig wird die Druckleitung zu den Luftfederbälgen 5 der anzuhebenden Achse 2 verschlossen und die Luftfederbälge 5 entlüftet. Danach können der Schwenkzylinder 9 und der hinter einem Überströmventil 19 liegende Hubbalg 8 belüftet werden.

Zum Absenken der Achse 2 schliesst wieder ein elektrisches Signal das Magnetventil 16. Die Leitungen vom Druckbehälter 17 zu den 3/2 Wegeventilen 18 werden geschlossen. Gleichzeitig geben die 3/2 Wegeventile 18 die Luftleitungen zu den Luftfederbälgen 5 wieder frei. Der Hubbalg 8 und der Schwenkzylinder 9 werden entlüftet, so dass die Achse 2 wieder Bodenkontakt bekommt.

Wenn bei angehobener Achse 2 der Luftdruck in den Luftfederbälgen 5 der tragenden Achse 3 einen bestimmten Wert überschreitet, wird ein Druckschalter 20 betätigt, der mit einem elektrischen Signal, welches durch ein Relais 21 verzögert wird, das Magnetventil öffnet, welches gleichzeitig die Druckleitung zu den 3/2 Wegeventilen 18 schliesst. Danach folgt dann der gleiche Regelvorgang, wie er vorstehend für das Absenken der Achse 2 beschrieben worden ist.

Bezugszeichenliste
1 Fahrzeugrahmen
2 Achse
3 Achse
4 Lenker
5 Luftfederbalg
6 Anhebevorrichtung
7 Hebel
8 Hubbalg
9 Schwenkzylinder
10 Quertraverse
11 Bügel
12 Schwenkachse
13 Kolbenstange
14 Schenkel
15 Achskörper
16 Magnetventil
17 Druckbehälter
18 3/2 Wegeventil
19 Überströmventil
20 Druckschalter
21 Relais

**Patentansprüche**

1. Achsanhebevorrichtung für eine luftgefederte Achse (2) mit einem den Achskörper untergreifenden, L-förmig ausgebildeten Hebel (7), einem vertikal wirkenden Hubbalg zum Anheben des Hebels (7) und einem Schwenkzylinder (9) zum Verschwenken des Hebels (7) unter den Achskörper, wobei der lange Schenkel des Hebels (7) an einem mit dem Hubbalg (8) verbundenen Bügel (11) gelagert ist und der Schwenkzylinder (9) an dem gleichen Bügel (11) befestigt ist, dadurch gekennzeichnet, dass der Bügel (11) ein U-förmiger Bügel ist, dessen beide Schenkel nach unten gerichtet sind und den langen Schenkel des Hebels (7) lagern, wobei der Hubbalg am Steg des U-förmigen Bügels (7) angreift, so dass der Bügel (7) vertikal bewegbar ist.

2. Vorrichtung nach Anspruch 1, dadurch gekennzeichnet, dass der Schwenkzylinder (9) ein an sich bekannter Membranzylinder ist, dessen Kolbenstange (13) gelenkig am langen Schenkel des Hebels (7) angreift.

**Revendications**

1. Dispositif de relevage d'essieu pour un essieu à suspension pneumatique (2), avec un levier (7) réalisé en forme de L saisissant par en dessous le corps de l'essieu, un soufflet de levage agissant verticalement pour le relevage du levier (7) et un cylindre de basculement (9) pour le basculement du levier (7) sous le corps de l'essieu, le grand côté du levier (7) étant articulé sur un étrier (11) assemblé avec le soufflet de levage (8) et le cylindre de pivotement (9) étant fixé sur cet étrier (11) caractérisé en ce que l'étrier (11) est un étrier en forme de U dont les deux branches sont dirigées vers le bas et fortement le montage articulé du levier (7), le soufflet de levage agissant sur l'âme de l'étrier (11) en forme de U, de sorte que l'étrier (11) soit déplaçable verticalement.

2. Dispositif selon la revendication 1, caractérisé en ce que le cylindre de basculement (9) est un vérin à membrane en soi connu, dont la tige de piston (13) agit par une articulation sur le grand côté du levier (7).

**Claims**

1. An axle raising device for an air-sprung axle (2) with an L-shaped lever (7) gripping the axle body from below, a vertically-operating lifting bellows for liftting the lever (7) and a pivoting cylinder (9) for pivoting the lever (7) under the axle body, wherein the long arm of the lever (7) is mounted on a hanger (11) connected with the lifting bellows (8), and the pivoting cylinder is fixed onto the same hanger (11), characterised in that the hanger (11) is a U-shaped hanger both arms of which are directed downwardly and support the long arm of the lever (7), wherein the lifting bellows engages the web of the U-shaped hanger (11), so that the hanger (11) is vertically movable.

2. Device according to claim 1, characterised in that the pivoting cylinder (9) is a per se known diaphragm cylinder, the piston rod (13) of which engages the long arm of the lever (7) with a hinged joint.

Fig.1

Fig. 2

2/3

Fig. 3

Fig. 4

Fig. 5